# EUROPEAN PATENT APPLICATION

(11) **EP 3 299 511 A1**
(43) Date of publication of application: **28.03.2018**
(21) Application number: 16799144.7
(22) Date of filing: 13.04.2016
(51) Int. Cl.: D06F 58/20

(54) **CLOTHES DRYER AND CONTROL METHOD THEREFOR**

(30) Priority: 22.05.2015 CN 201510267682
(71) Applicant: Qingdao Haier Washing Machine Co., Ltd., Shandong 266101 (CN)
(72) Inventor: LV, Peishi, Qingdao Shandong 266101 (CN); XU, Sheng, Qingdao Shandong 266101 (CN); SONG, Huacheng, Qingdao Shandong 266101 (CN); SHAN, Shiqiang, Qingdao Shandong 266101 (CN); TIAN, Shujun, Qingdao Shandong 266101 (CN)
(74) Representative: Ziebig, Marlene
(86) International application number: PCT/CN2016/079207
(87) International publication number: WO 2016/188255

(57) **Abstract**

A drying machine and a control method thereof are provided. The drying machine and the control method thereof belong to the field of drying machine and the control method thereof, and aim to solve the problem of poor operating efficiency of the existing drying machine. The drying machine includes a liquid accumulator (1), a circulating pump (2), a radiator tube (3) and a heat absorber tube (4) connected sequentially through pipelines. A radiator housing (5) is provided outside the radiator tube (3). A heat absorber housing (6) is provided outside the heat absorber tube (4). A condenser (7) is arranged between the radiator housing (5) and the heat absorber housing (6). The radiator housing (5) is connected with an air inlet (8), and the heat absorber housing (6) is connected with a return air inlet (9). Energy storage material is driven by carrier liquid to flow along the pipelines.

## Description

### TECHNICAL FIELD

The present disclosure relates to a drying machine and a control method thereof.

### BACKGROUND

A condensing type drying machine is an electric appliance in which the air is served as drying medium after being condensed and dewatered. In a drying machine with latent heat storage in the relevant arts, a mixture consisting of carrier liquid and a phase transition material which is slightly coated and suspended in the carrier liquid can flow between a heat exchanger and a collecting container through pipelines of the drying machine. Therefore, the drying machine utilizes endothermic and exothermic characteristics of the phase transition material (corresponding to an air dehumidification/heating process of the drying performed by the drying machine) during the phase transition to realize condensation dehumidification or heating drying of the air.

In the drying machine with such structures, condensation dehumidification and heating drying of the air are two separated working processes. The mixture needs to be discharged from the heat exchanger after being used for the condensation dehumidification of the air, and then is transferred through the collecting container to enter the heat exchanger again to be used for heating and drying the air. Therefore, the condensing type drying machine has low operating efficiency and poor dehumidification/heating effect.

### SUMMARY

Embodiments of the present disclosure propose a drying machine having high operating efficiency and good dehumidification/heating effect.

Embodiments of the present disclosure propose a control method of a drying machine capable of recovering heat effectively.

The drying machine includes a liquid accumulator, a circulating pump, a radiator tube and a heat absorber tube connected sequentially through pipelines. A radiator housing is provided outside the radiator tube. A heat absorber housing is provided outside the heat absorber tube. A condenser is arranged between the radiator housing and the heat absorber housing. The radiator housing is connected with an air inlet, and the heat absorber housing is connected with a return air inlet. Energy storage material is driven by carrier liquid to flow along pipelines.

Optionally, the energy storage material is solid-liquid phase transition material.

Optionally, a thermal insulation layer is provided outside the liquid accumulator.

Optionally, the energy storage material is coated with a plastic housing which is made from polyvinyl chloride PVC or PT.

Optionally, the energy storage material is nano composite solid-liquid phase transition material.

Optionally, the carrier liquid is saline water.

In addition, embodiments of the present disclosure propose a control method based on the above drying machine. According to the control method, the energy storage material absorbs heat in hot humid air in the heat absorber housing so that moisture in the hot humid air is condensed and precipitated. The drying air being condensed and cooled is heated by the energy storage material having absorbed heat in the radiator housing.

Optionally, the method includes steps described below.

The drying air is heated by a heating unit after entering an air pipe, and then the drying air being heated enters a drum body to make objects to be dried dry, so that the drying air absorbs the moisture in the objects to be dried and becomes the hot humid air.

The hot humid air comes into contact with a surface of the heat absorber housing after passing through the return air inlet, and the energy storage material flows into the heat absorber tube to absorb the heat of the hot humid air, so that the moisture in the hot humid air is condensed and precipitated preliminarily.

the hot humid air being condensed and precipitated preliminarily passes through the condenser, and the moisture in the air is further condensed and precipitated so that hot humid air decreases in terms of temperature and humidity and becomes condensing drying air.

The condensing drying air enters into the radiator housing, and the heated energy storage material flows into the radiator tube to preliminarily heat the condensing drying air in the radiator housing.

The condensing drying air being preliminary heated is heated by the heating unit, and becomes drying air and then flows into the drum body.

In the drying machine provided by embodiments of the present disclosure, the liquid accumulator, the circulating pump, the radiator tube and the heat absorber tube are connected sequentially through pipelines to form a passage. The energy storage material is driven by the carrier liquid to flow along the pipeline, so as to absorb the heat of hot humid air and heat the drying air being condensed. Thus, the drying machine has high operating efficiency and good dehumidification/heating effect. The radiator housing is connected with the air inlet, and the heat absorber is connected with the return air inlet. In addition, a condenser is arranged between the radiator housing and the heat absorber housing to condense, dehumidificate and heat the hot humid air so as to avoid heat loss.

According to the control method of the drying machine provided by the embodiments of the present disclosure, the energy storage material absorbs the heat of the hot humid air in the heat absorber housing and heats the drying air being condensed in the radiator housing, thereby realizing good heat recovery effect.

### BRIEF DESCRIPTION OF DRAWINGS

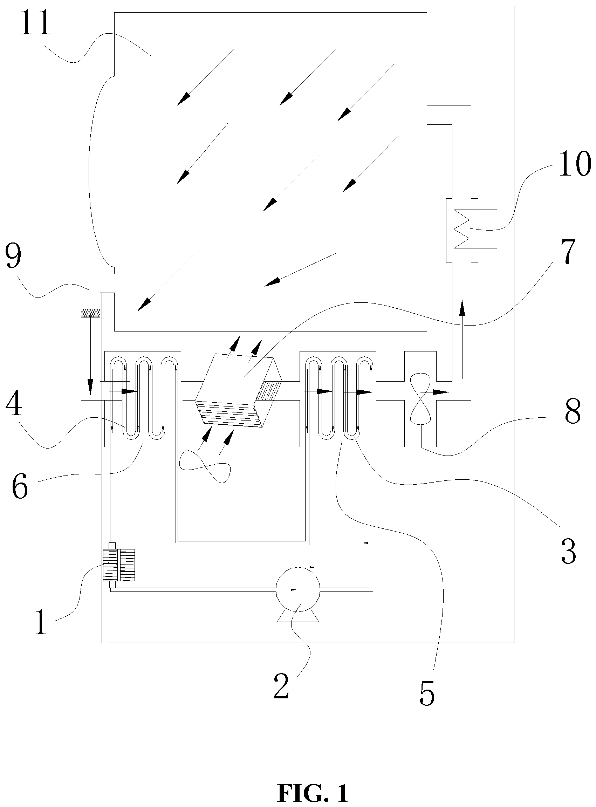

FIG. 1 is a schematic diagram illustrating a structure of a drying machine provided by preferred embodiment I of the present disclosure.

### List of Reference Numerals

1. liquid accumulator; 2. circulating pump; 3. radiator tube; 4. heat absorber tube; 5. radiator housing; 6. heat absorber housing; 7. condenser; 8. air inlet; 9. return air inlet; 10. heating unit; 11. drum body.

### DETAILED DESCRIPTION

Embodiments of the present disclosure will be described below in combination with the drawings.

### Embodiment I

The present embodiment provides a drying machine. As shown in FIG. 1, the drying machine includes an liquid accumulator 1, a circulating pump 2, a radiator tube 3 and a heat absorber tube 4 connected sequentially through the pipelines. A radiator housing 5 is provided outside the radiator tube 3, and a heat absorber housing 6 is provided outside the heat absorber tube 4. A condenser 7 is connected between the radiator housing 5 and the heat absorber housing 6 along the air duct. The radiator housing 5 is connected with an air inlet 8, and the heat absorber housing 6 is connected with a return air inlet 9. Energy storage material flows along the pipelines driven by the carrier liquid. The condenser 7 is an air-cooled condenser.

The carrier liquid carried with the energy storage material can flow continuously in the pipelines driven by the circulation pump 2, thereby realizing high operating efficiency and good dehumidification/heating effect.

To avoid heat waste, a thermal insulation layer is provided outside the liquid accumulator 1 so that all the heat absorbed by the energy storage material is used to heat the drying air condensed. The liquid accumulator 1 has a spiral structure or layered structure. The spiral structure or layered structure may be used as a guiding surface of the energy storage material, so that the energy storage material in the liquid accumulator 1 realizes first-in first-out, thereby realizing full recycling of the energy storage material. Therefore, the energy of the energy storage material is sufficiently utilized.

In order to ensure that the carrier liquid carried with the energy storage material smoothly flows in the pipelines, and avoid the energy storage material being jammed in dead angle positions of the pipelines or some other devices, the energy storage material is coated with a plastic housing to form a capsule structure. The plastic housing is preferably made from polyvinyl chloride PVC or PT, which has better performance and lower manufacturing cost.

Solid-liquid phase transition material is selected as the energy storage material so as to obtain better endothermic/exothermic effects. Optionally, the energy storage material may be nano composite solid-liquid phase transition material. In the case that the phase transition point (i.e., transition temperature at which the energy storage material is transited between solid and liquid phase) of energy storage material is 60°C, before the return air temperature of drying air (i.e., the air for drying moist objects in the drying machine) is lower than 60°C, the energy storage material is heated up without transiting from the solid phase to the liquid phase (i.e., no phase transition occurred in the energy storage material). When the return air temperature of drying air increases to be higher than 60°C, the energy storage material absorbs a lot of heat during phase transition, while the temperature of the energy storage material is still maintained at 60°C. As a result, the temperature of the drying air drops to 60°C at most, which leads to pre-condensation. The drying air is dehumidified and cooled when entering the condenser. During the process, since the steam in the drying air is saturated, moisture in the drying air is precipitated so that the drying air become relatively dry and the temperature drops below 60°C. The drying air below 60°C will make heat exchange again with the circulating liquid energy storage material at 60°C when the drying air flows into the radiator housing 5. During the heat exchange, latent heat is released from the energy storage material so that the drying air can be preheated before being heated by the heating tube.

Optionally, the carrier liquid is saline water having good stability and fluidity.

A control method based on the above drying machine includes steps described below.

In step 1, the drying air is heated by the heating unit 10 after entering an air pipe, and then enters the drum body 11 to make the objects to be dried dry. Accordingly, the drying air absorbs the moisture in the objects to be dried, and becomes hot humid air.

In step 2, the hot humid comes into contact with the surface of the heat absorber housing 6 after passing through the return air inlet 9, and the energy storage material flows into the heat absorber tube 4 to absorb the heat of the hot humid so that the moisture in the hot humid air is condensed and precipitated preliminarily.

In step 3, the hot humid air being condensed and precipitated preliminarily passes through the condenser 7, and the moisture in the air is further condensed and precipitated so that hot humid air decreases in terms of temperature and humidity and becomes drying air being condensed.

In step 4, the drying air being condensed enters into the radiator housing 5, and the energy storage material being heated flows into the radiator tube 3 to preliminarily heat the condensing drying air in the radiator housing 5.

In step 5, the drying air being preliminary heated is heated by the heating unit 10, and becomes drying air and then flows into the drum body 11.

The sequence of the above steps is only for convenient description instead of defining the execution sequence of the steps.

### Embodiment II

The present embodiment discloses a drying machine the structure of which is basically the same as embodiment I. The drying machine includes a liquid accumulator, a circulating pump, a radiator tube and a heat absorber tube connected sequentially through the pipelines. A radiator housing is provided outside the radiator tube, and a heat absorber housing is provided outside the heat absorber tube. A condenser is connected between the radiator housing and the heat absorber housing. The radiator housing is connected with an air inlet, and the heat absorber housing is connected with a return air inlet. Energy storage material flows along the pipelines driven by the carrier liquid.

The differences are described below. The condenser is not limited to the air-cooled condenser, but also can be a heat pump evaporator or other structures, as long as the condenser can be used for dehumidification and condensation of hot humid air. Either a thermal insulation layer is provided outside the liquid accumulator, or other means for heat preservation are adopted, as long as the waste of absorbed heat in the energy storage material is avoided. The energy storage material may be coated with a plastic housing or not as long as the energy storage material can flow along the pipelines smoothly. The specific material of the energy storage material is not limited. The energy storage material may be solid-liquid phase transition material (i.e. nano composite solid-liquid phase transition material) or other kinds of energy storage material as long as it enables to recycle the heat in the drying air. The material of the carrier liquid is not limited, and may be saline water or other kinds of liquid as long as the carrier liquid carried with the energy storage material can flow stably and smoothly.

In the control method of the above drying machine provided by the present embodiment, the energy storage material absorbs the heat of the hot humid air in the heat absorber housing so that the moisture in the hot humid air is condensed and precipitated. The hot humid air being condensed and cooled becomes drying air, and then the drying air is heated in the radiator housing by the energy storage material which has absorbed heat.

The steps of the control method are not limited as long as the heat in the hot humid air is absorbed in the heat absorber housing as well as the condensed and cooled drying air is heated in the radiator housing.

It is noticed that the above description merely relates to optional embodiments of the present disclosure and the technical principles thereof. For those skilled in the field, embodiments of the present disclosure are not limited to the above optional embodiments, can make various apparent modifications, readjustments and replacements without departing from the scope of the present disclosure.

## Claims

1. A drying machine, comprising a liquid accumulator (1), a circulating pump (2), a radiator tube (3) and a heat absorber tube (4) connected sequentially through pipelines,
wherein a radiator housing (5) is provided outside the radiator tube (3), a heat absorber housing (6) is provided outside the heat absorber tube (4), and a condenser (7) is arranged between the radiator housing (5) and the heat absorber housing (6); the radiator housing (5) is connected with an air inlet (8), and the heat absorber housing (6) is connected with a return air inlet (9), wherein energy storage material is driven by carrier liquid to flow along the pipelines.

2. The drying machine according to claim 1, wherein the energy storage material is solid-liquid phase transition material.

3. The drying machine according to claim 1, wherein a thermal insulation layer is provided outside the liquid accumulator (1).

4. The drying machine according to claim 1, wherein the energy storage material is coated with a plastic housing, wherein the plastic housing made from one of polyvinyl chloride PVC and PT.

5. The drying machine according to any one of claims 1-4, wherein the energy storage material is nano composite solid-liquid phase transition material.

6. The drying machine according to any one of claims 1-4, wherein the carrier liquid is saline water.

7. A control method of the drying machine according to any one of claims 1-6, comprising:
absorbing, by the energy storage material, heat in hot humid return air in the heat absorber housing (6) so that moisture in the hot humid air is condensed and precipitated; and
heating, by the energy storage material having absorbed heat, drying air being condensed and cooled in the radiator housing (5).

8. The control method of the drying machine according to claim 7, wherein
the absorbing, by the energy storage material, heat in hot humid return air in the heat absorber housing (6) so that moisture in the hot humid air is condensed and precipitated comprises:
heating the drying air by a heating unit (10) after the drying air enters an air pipe, and supplying the drying air being heated to a drum body (11) to make objects to be dried dry, so that the drying air absorbs the moisture in the objects to be dried and becomes the hot humid air;
letting the hot humid air come into contact with a surface of the heat absorber housing (6) after passing through the return air inlet (9), and supplying the energy storage material to the heat absorber tube (3) to absorb the heat of the hot humid air, so that the moisture in the hot humid air is condensed and precipitated preliminarily; and
supplying the hot humid air being condensed and precipitated preliminarily to the condenser (7) to further condense and precipitate the moisture in the air, so that hot humid air decreases in terms of temperature and humidity and becomes drying air being condensed ;
wherein the heating, by the energy storage material having absorbed heat, drying air being condensed and cooled in the radiator housing (5) comprises:
supplying the drying air being condensed to the radiator housing (5), and supplying the energy storage material being heated to the radiator tube (3) to preliminarily heat the drying air being condensed in the radiator housing (5); and
heating, by the heating unit (10), the drying air being condensed that has been preliminary heated, and supplying the drying air to the drum body (11).
